# DEMANDE DE BREVET EUROPEEN

(11) **EP 1 514 464 A1**
(43) Date de publication de la demande: **16.03.2005**
(21) Numéro de dépôt: 04300579.2
(22) Date de dépôt: 07.09.2004
(51) Int. Cl.: A01B 69/00

(54) **Attelage agricole comprenant un véhicule tracteur et un engin tracté**

(30) Priorité: 15.09.2003 FR 0310809
(71) Demandeur: Kuhn-Nodet S.A., 77876 Montereau (FR)
(72) Inventeur: Renault, Stéphane, 59116 HOUPLINES (FR); Reine, Cyril, 77480 VILLUIS (FR); Lor, Sébastien, 77720 MORMANT (FR)
(74) Mandataire: Andres, Jean-Claude

(57) **Abrégé**

La présente invention se rapporte à un attelage agricole composé d'un véhicule tracteur (3), et d'un engin tracté (2) muni d'un dispositif directeur (21) destiné à modifier la trajectoire prise par ledit engin tracté (2), ledit dispositif directeur (21) comporte à son tour un moyen de détection (23) pour mesurer l'angle de lacet qui apparaît lors de virages entre ledit véhicule tractcur (3) et ledit engin tracté (2), ledit moyen de détection (23) est constitué d'un capteur (24), d'un élément d'accrochage (26), et d'un élément de liaison (25) reliant ledit capteur (24) audit élément d'accrochage (26)

Cet attelage est caractérisé en ce que ledit élément de liaison (25) est réalisé au moyen d'une conduite flexible (27), laquelle est déformable tout en étant capable de transmettre un couple, et une partie de ladite conduite flexible (27) est glissée à l'intérieur d'une cane rigide (28).

## Description

La présente invention se rapporte au domaine technique générale du machinisme agricole.

Elle concerne plus précisément un attelage agricole composé d'un véhicule tracteur, et d'un engin tracté muni d'un dispositif directeur destiné à modifier la trajectoire prise par ledit engin tracté, ledit dispositif directeur comporte à son tour un moyen de détection pour mesurer l'angle de lacet qui apparaît lors de virages entre ledit véhicule tracteur et ledit engin tracté, ledit moyen de détection est lié d'une part audit véhicule tracteur et d'autre part audit engin tracté, de plus ledit moyen de détection est constitué d'un capteur, d'un élément d'accrochage, et d'un élément de liaison reliant ledit capteur audit élément d'accrochage.

Par le document ***FR-A-2 828 532*,** il est connu un engin agricole tracté muni d'un dispositif directeur. Cet engin tracté est plus précisément une remorque destinée à être attelée à un véhicule tracteur. Le dispositif directeur agit sur des roues orientables de la remorque afin notamment de faciliter les manoeuvres. Pour ce faire, le dispositif directeur comporte un vérin émetteur lié hydrauliquement à un vérin récepteur. Le vérin récepteur agit sur l'angle d'inclinaison des roues orientables. Pour sa part le vérin émetteur est lié à l'une de ses extrémités à ladite remorque et à l'autre de ses extrémités à un point fixe du tracteur au moyen d'un élément de liaison et d'un élément d'accrochage. Ce point fixe est décalé sur le coté par rapport au point d'attelage de la remorque audit tracteur. Ainsi lorsque cet attelage connu prend un virage, il en résulte une variation de la longueur du vérin émetteur. Le vérin émetteur constitue alors un moyen de détection pour mesurer l'angle de lacet qui apparaît lors de virages, entre ledit véhicule tracteur et ledit engin tracté.

Un inconvénient de cet attelage connu réside dans le fait que le vérin émetteur réagit certes à l'angle de lacet entre le tracteur et la remorque, mais il réagit également à l'angle de roulis et à l'angle de tangage. En effet lorsque par exemple l'une seulement des roues arrières du tracteur descend dans un creux du sol et que la remorque est encore sur une partie plane, l'angle de roulis ainsi créé provoque une variation de la longueur du vérin émetteur. Donc même si l'attelage suit une trajectoire rectiligne, la présence d'un creux ou d'une bosse sur le sol aura comme conséquence une inclinaison non souhaitée des roues orientables de la remorque. Cette commande non souhaitée des roues orientables peut être préjudiciable même si elle est de courte durée. C'est le cas notamment lors des travaux de pulvérisation où l'on veut que les roues de l'engin tracté suivent exactement les roues du véhicule tracteur, sous peine d'écraser et donc de perdre une partie de la récolte.

Le but de la présente invention est de remédier à cet inconvénient de l'état de la technique.

A cet effet, l'attelage agricole selon la présente invention est caractérisé par le fait que ledit élément de liaison est réalisé au moyen d'une conduite flexible, laquelle est déformable tout en étant capable de transmettre un couple, une partie de ladite conduite flexible est glissée à l'intérieur d'une canne rigide, et l'une des extrémités de ladite conduite flexible est dirigée suivant une direction sensiblement verticale.

La flexibilité de ladite conduite permet avantageusement audit moyen de détection de s'adapter aux mouvements de roulis et aux mouvements de tangage entre ledit véhicule tracteur et ledit engin tracté. L'extrémité dirigée suivant une direction sensiblement verticale permet de solliciter en torsion ladite conduite flexible, lors des mouvements de lacet entre ledit véhicule tracteur et ledit engin tracté. Pour sa part, la canne rigide garantie une transmission fiable de ce mouvement de torsion jusqu'au capteur.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, vu de côté, un exemple d'attelage agricole conforme à la présente invention,
- la **figure 2** représente, vu de côté et en coupe, un agrandissement de l'exemple d'attelage de la figure 1,
- la **figure 3** représente, vu en perspective, l'agrandissement de la figure 2.

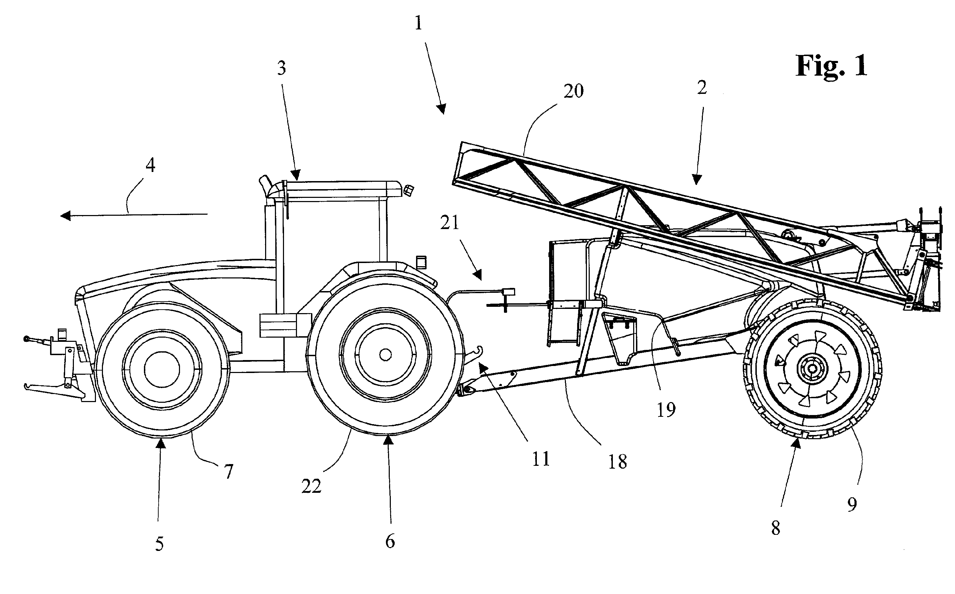

La figure 1 représente un attelage agricole (1) conforme à la présente invention. Ledit attelage (1) se compose d'un engin tracté (2) et d'un véhicule tracteur (3). Ledit véhicule tracteur (3) tire ledit engin tracté (2) suivant une direction et un sens d'avance indiqué par la flèche (4). Dans la suite de la description, les notions suivantes "avant" et "arrière", "devant" et "derrière" sont définies par rapport au sens d'avance (4) et les notions "droite" et "gauche" sont définies en regardant ledit attelage (1) de l'arrière dans le sens d'avance (4).

D'une manière générale et à la lumière de la figure 1, ledit véhicule tracteur (3) comporte un essieu avant (5) et un essieu arrière (6). Les roues (7) dudit essieu avant (5) sont avantageusement directrices. Ledit véhicule tracteur (3) est également pourvu d'un moteur et d'un poste de pilotage.

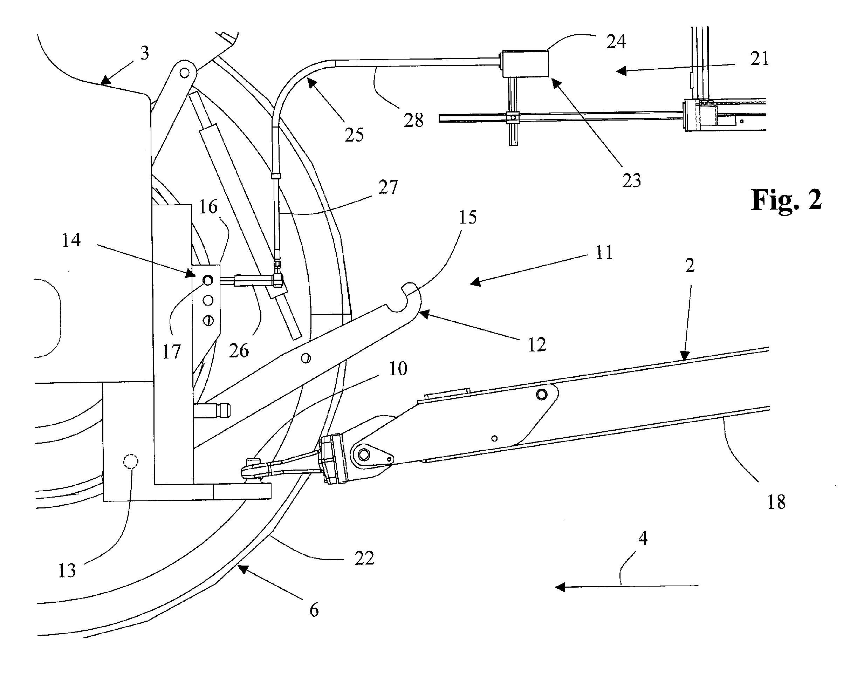

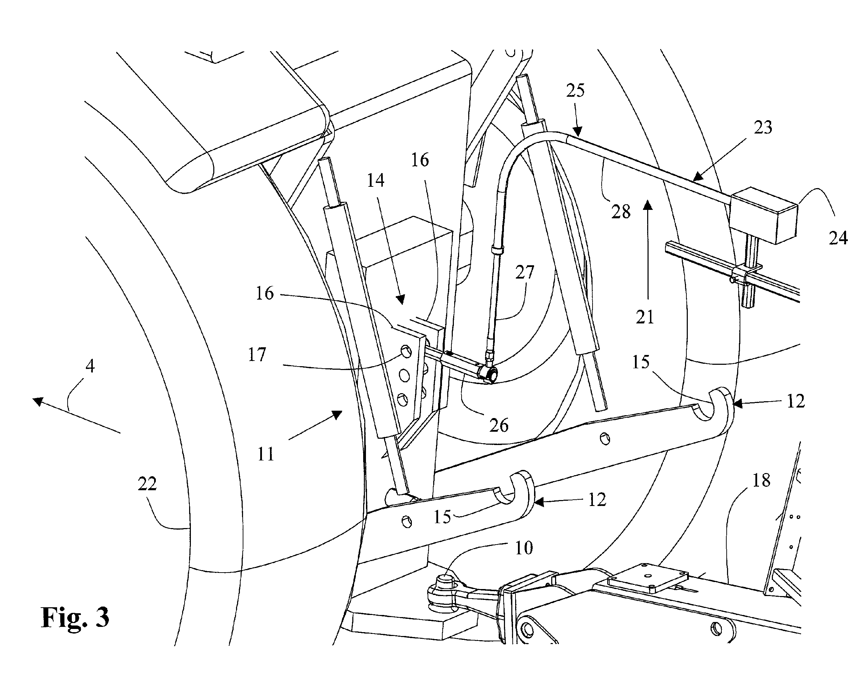

Dans l'exemple de réalisation représenté sur les figures, ledit engin tracté (2) est un pulvérisateur agricole destiné à épandre un produit de traitement sur le sol ou sur des plantes. Ainsi d'une manière connue de l'homme de l'art, ledit engin tracté (2) comporte un châssis (18) supportant une cuve (19) et une rampe d'épandage (20). Ladite cuve (19) est destinée à contenir ledit produit de traitement. Pour sa part, ladite rampe (20) est munie de buses afin de pulvériser ledit produit de traitement sur une grande largeur de travail. Sur la figure 1, ladite rampe (20) est repliée le long de ladite cuve (19) en vue du transport sur voie publique. Ledit pulvérisateur comporte encore un dispositif pour pomper le produit de traitement de ladite cuve (19) jusqu'auxdites buses. Pour sa part, ledit châssis (18) repose sur le sol au moyen d'un essieu (8) disposé à l'arrière dudit engin tracté (2). De plus, ledit châssis (18) est lié à l'arrière dudit véhicule tracteur (3) en un point d'attelage (10) visible sur les figures 2 et 3. Le fonctionnement général d'un tel pulvérisateur agricole étant connu de l'homme de l'art, il ne sera donc pas décrit plus en détails.

A la lumière de la figure 3, ledit point d'attelage (10) est situé dans le plan vertical médian dudit véhicule tracteur (3). D'une manière également connue de l'homme de l'art, ledit point d'attelage (10) permet au moins un pivotement autour d'un axe dirigé vers le haut, entre ledit engin tracté (2) et ledit véhicule tracteur (3). Ce mouvement de pivotement est sollicité lorsque ledit attelage (1) décrit une trajectoire courbe. L'angle qui apparaît, lors du pivotement autour de l'axe dirigé vers le haut, entre un axe longitudinal dudit véhicule tracteur (3) et un axe longitudinal dudit engin tracté (2) est appelé angle de lacet. D'une manière avantageuse, ledit point d'attelage (10) permet également un pivotement autour d'un axe horizontal et transversal à ladite direction d'avance (4). Ce pivotement autorise un mouvement de tangage entre ledit engin tracté (2) et ledit véhicule tracteur (3). Ledit point d'attelage (10) permet en sus un pivotement autour d'un axe dirigé suivant ladite direction d'avance (4). Ce pivotement autorise cette fois un mouvement de roulis entre ledit engin tracté (2) et ledit véhicule tracteur (3).

Ledit engin tracté (2) comporte avantageusement un dispositif directeur (21). A son tour, ledit dispositif directeur (21) comporte des éléments de direction destinés à modifier la trajectoire dudit engin tracté (2). Dans le cas d'un pulvérisateur agricole, ledit dispositif directeur (21) est employé pour que les roues (9) dudit engin tracté (2) roulent, même en virage, exactement dans les traces laissées par les roues (22) de l'essieu arrière (6) dudit engin tracteur (3). On diminue ainsi la perte de récolte due à l'écrasement par les pneus (5, 6, 9) dudit attelage (1). Avec d'autres engins tractés (2), ledit dispositif directeur (21) est employé essentiellement pour faciliter les manoeuvres. Dans l'exemple de réalisation représenté sur les figures, lesdits éléments de direction sont réalisés au moyen dudit essieu (8), lequel est avantageusement un essieu directeur. Les roues (9) dudit engin tracté (2) peuvent ainsi être pivotées, au moyen d'un vérin par exemple, autour d'un axe respectif dirigé vers le haut. Un tel essieu directeur (8) étant connu par l'homme de l'art, il ne sera donc pas décrit d'avantage. Ledit dispositif directeur (21) comporte également un moyen de détection (23) pour mesurer l'angle de lacet qui apparaît, lors de virages, entre ledit véhicule tracteur (3) et ledit engin tracté (2). Ledit moyen de détection (23) est lié d'une part audit véhicule tracteur (3) et d'autre part audit engin tracté (2). A cet effet, ledit moyen de détection (23) est constitué d'un capteur (24), d'un élément d'accrochage (26), et d'un élément de liaison (25) reliant ledit capteur (24) audit élément d'accrochage (26). En fonction des informations provenant dudit moyen de détection (23), ledit dispositif directeur (21) influence de manière adéquate la trajectoire dudit engin tracté (2).

Selon une caractéristique importante de la présente invention, ledit élément de liaison (25) est réalisé au moyen d'une conduite flexible (27), laquelle est déformable tout en étant capable de transmettre un couple, une partie de ladite conduite flexible (27) est glissée à l'intérieur d'une canne rigide (28), et l'une des extrémités de ladite conduite flexible (27) est dirigée suivant une direction sensiblement verticale.

Dans l'exemple de réalisation représenté sur les figures, ledit capteur (24) est avantageusement disposé à l'intérieur d'un boîtier afin d'être protégé notamment des intempéries. D'une manière préférentielle, ledit boîtier est lié audit engin tracté (2) de manière réglable suivant un axe sensiblement vertical et suivant un axe longitudinal dudit engin tracté (2). La position dudit capteur (24) peut ainsi facilement être réglée en fonction dudit véhicule tracteur (3). Pour sa part, ledit élément d'accrochage (26) est lié audit véhicule tracteur (3). D'une manière préférentielle, ladite canne rigide (28) est liée audit boîtier afin que la position de ladite canne rigide (28) soit réglée en même tant que la position dudit boîtier. Ladite canne rigide (28) permet de guider ladite conduite flexible (27) à la sortie dudit capteur (24) suivant un axe dirigé vers l'avant puis suivant un axe dirigé vers le bas. Au débouché de ladite canne rigide (28), ladite conduite flexible (27) est ainsi avantageusement dirigée vers ledit élément d'accrochage (26) suivant un axe sensiblement vertical. En outre, l'extrémité de ladite conduite flexible (27) arrive de préférence sur ledit élément d'accrochage (26) suivant un axe dirigé vers le bas. Ainsi tout pivotement dudit élément d'accrochage (26) autour d'un axe vertical engendre un mouvement de torsion de l'extrémité de ladite conduite flexible (27). Ce mouvement de torsion est alors transmis jusqu'audit capteur (24).

En se reportant plus précisément aux figures 2 et 3, ledit véhicule tracteur (3) comporte encore à l'arrière un attelage trois points (11). D'une manière connue de l'homme du métier, ledit attelage trois points (11) comporte à son tour deux points d'appui inférieurs (13) et un point d'appui supérieur (14). Lesdits points d'appui inférieurs (13) sont disposés de part et d'autre d'un plan vertical médian dudit véhicule tracteur (3). Chaque point d'appui inférieur (13) permet de lier l'extrémité d'une barre inférieure d'attelage respective (12) audit véhicule tracteur (3). L'autre extrémité desdites barres inférieures d'attelage (12) comporte un point d'attelage inférieur respectif (15). Pour sa part, ledit point d'appui supérieur (14) est situé dans ledit plan vertical médian dudit véhicule tracteur (3). Ledit point d'appui supérieur (14) est destiné à lier l'extrémité d'une barre supérieure d'attelage, non représentée, audit véhicule tracteur (3). De même, l'autre extrémité de ladite barre supérieure d'attelage comporte un point d'attelage supérieur non représenté. Lesdits points d'attelage inférieurs (15) et ledit point d'attelage supérieur sont prévus pour être liés à un outil agricole. Ledit attelage trois points (11) comporte en sus un organe de manoeuvre, par exemple un vérin, afin de pivoter verticalement lesdites barres inférieures d'attelage (12) autour desdits points d'appui inférieurs respectifs (13). Ce mouvement de pivotement desdites barres inférieures d'attelage (12) permet de soulever l'outil agricole lié audit attelage trois points (11).

A la lumière de la figure 3, ledit point d'appui supérieur (14) est réalisé au moyen de deux plaques (16) liées rigidement à l'arrière dudit véhicule tracteur (3). Lesdites plaques (16) sont disposées verticalement de part et d'autre du plan vertical médian dudit véhicule tracteur (3). Lesdites plaques (16) comportent chacune au moins un trou (17). Lesdits trous (17) sont disposés coaxialement de manière à ce qu'un axe horizontal puisse traverser lesdites plaques (16). D'une manière préférentielle, lesdites plaques (16) comportent plusieurs trous coaxiaux disposés les uns au-dessus des autres. L'utilisateur a alors le choix entre plusieurs possibilités pour lier ladite barre supérieure d'attelage audit point d'appui supérieur (14). Il peut ainsi régler ledit attelage trois points (11). Le diamètre desdits trous (17) et l'écartement minimal entre lesdites plaques (16) sont définis par une norme.

D'une manière avantageuse ledit élément d'accrochage (26) est lié par l'une de ses extrémités audit point d'appui supérieur (14), l'autre extrémité dudit élément d'accrochage (26) étant liée audit élément de liaison (25). D'une manière préférentielle, la liaison entre ledit élément d'accrochage (26) et ledit point d'appui supérieur (14) est réalisée au moyen d'un axe traversant deux trous coaxiaux (17) desdits plaques (16). Ledit élément d'accrochage (26) peut alors avantageusement pivoter par rapport audit point d'appui supérieur (14) autour d'un axe transversal à ladite direction d'avance (4). D'une manière également préférentielle, la liaison entre ledit élément d'accrochage (26) et ledit élément de liaison (25) est réalisée au moyen d'une articulation pivot dont l'axe est sensiblement confondu avec l'axe longitudinal dudit élément d'accrochage (26). De plus, la longueur dudit élément d'accrochage (26) peut avantageusement être réglée afin d'écarter ledit élément de liaison (25) par rapport à des organes présents à l'arrière dudit véhicule tracteur (3), comme par exemple des prises hydrauliques. On réduit ainsi les risques d'arrachage dudit élément de liaison (25) lors des manoeuvres. Dans l'exemple de réalisation représenté sur les figures, l'extrémité de ladite conduite flexible (27) arrive de préférence radialement sur ledit élément d'accrochage (26).

Le diamètre desdits trous coaxiaux (17) et l'écartement entre lesdites plaques (16) étant définis par une norme, ledit élément d'accrochage (26) pourra aisément et sans modification être lié à tous les véhicules tracteurs (3) munis d'un attelage trois points (11). L'articulation pivot d'axe transversale entre ledit point d'appui supérieur (14) et ledit élément d'accrochage (26), et l'articulation pivot d'axe longitudinal entre ledit élément d'accrochage (26) et ledit élément de liaison (25) facilitent avantageusement l'adaptation dudit moyen de détection (23) aux mouvements de roulis et de tangage entre ledit véhicule tracteur (3) et ledit engin tracté (2).

L'attelage (1) qui vient d'être décrit, n'est qu'un exemple de réalisation qui ne saurait en aucun cas limiter le domaine de protection défini par les revendications suivantes.

Ainsi, d'autres engins agricoles tractés ou traînés munis d'un dispositif directeur (11) peuvent constituer ledit engin tracté (2), comme par exemple une charrue, une faucheuse, un andaineur, un semoir, ...

Selon encore un autre exemple de réalisation non représenté, ledit dispositif directeur (11) agit sur l'orientation d'un timon pour modifier la trajectoire dudit engin tracté (2). Ledit timon relie alors ledit châssis (18) audit point d'attelage (10) au moyen d'une articulation pivot d'axe vertical.

## Revendications

1. Attelage agricole composé d'un véhicule tracteur (3), et d'un engin tracté (2) muni d'un dispositif directeur (21) destiné à modifier la trajectoire prise par ledit engin tracté (2), ledit dispositif directeur (21) comporte à son tour un moyen de détection (23) pour mesurer l'angle de lacet qui apparaît lors de virages entre ledit véhicule tracteur (3) et ledit engin tracté (2), ledit moyen de détection (23) est lié d'une part audit véhicule tracteur (3) et d'autre part audit engin tracté (2), de plus ledit moyen de détection (23) est constitué d'un capteur (24), d'un élément d'accrochage (26), et d'un élément de liaison (25) reliant ledit capteur (24) audit élément d'accrochage (26),
***caractérisé par le fait que*** ledit élément de liaison (25) est réalisé au moyen d'une conduite flexible (27), laquelle est déformable tout en étant capable de transmettre un couple, une partie de ladite conduite flexible (27) est glissée à l'intérieur d'une canne rigide (28), et l'une des extrémités de ladite conduite flexible (27) est dirigée suivant une direction sensiblement verticale.

2. Attelage agricole selon la revendication 1, ***caractérisé par le fait que*** ledit capteur (24) est disposé dans un boîtier, lequel est lié audit engin tracté (2) de manière réglable suivant un axe sensiblement vertical et suivant un axe longitudinal dudit engin tracté (2).

3. Attelage agricole selon la revendication 2, ***caractérisé par le fait que*** ladite canne rigide (28) est liée audit boîtier.

4. Attelage agricole selon l'une quelconque des revendications 1 à 3, ***caractérisé par le fait que*** ladite canne rigide (28) permet de guider ladite conduite flexible (27), à la sortie dudit capteur (24), suivant un axe dirigé vers l'avant puis suivant un axe dirigé vers le bas.

5. Attelage agricole selon l'une quelconque des revendications 1 à 4, ***caractérisé par le fait que*** ledit véhicule tracteur (3) est muni d'un attelage trois points (11), lequel comporte un point d'appui supérieur (14) pour une barre supérieure d'attelage.

6. Attelage agricole selon la revendication 5, ***caractérisé par le fait que*** ledit élément d'accrochage (26) est lié par l'une de ses extrémités audit point d'appui supérieur (14), l'autre extrémité dudit élément d'accrochage (26) étant liée audit élément de liaison (25).

7. Attelage agricole selon la revendication 6, ***caractérisé par le fait que*** ledit élément d'accrochage (26) est lié audit point d'appui supérieur (14) de manière à pouvoir pivoter, par rapport à ce dernier, autour d'un axe transversal à la direction d'avance (4) dudit attelage (1).

8. Attelage agricole selon la revendication 6 ou 7, ***caractérisé par le fait que*** la liaison entre ledit élément d'accrochage (26) et ledit élément de liaison (25) est réalisée au moyen d'une articulation pivot dont l'axe est sensiblement confondu avec l'axe longitudinal dudit élément d'accrochage (26).

9. Attelage agricole selon l'une quelconque des revendications 1 à 8, ***caractérisé par le fait que la*** longueur dudit élément d'accrochage (26) est réglable.

10. Attelage agricole selon l'une quelconque des revendications 1 à 9, ***caractérisé par le fait que*** ledit engin tracté (2) est un pulvérisateur agricole.
